# EUROPÄISCHE PATENTSCHRIFT

(11) **EP 2 709 967 B1**
(45) Veröffentlichungstag und Bekanntmachung des Hinweises auf die Patenterteilung: **08.05.2019**
(21) Anmeldenummer: 12786522.8
(22) Anmeldetag: 15.05.2012
(51) Int. Cl.: C04B 35/634, B22F 3/10, C08L 59/00

(54) **VERFAHREN ZUR HERSTELLUNG VON BAUTEILEN IM PULVERSPRITZGUSSVERFAHREN**
PROCESS FOR PRODUCING COMPONENTS BY POWDER INJECTION MOLDING
PROCÉDÉ DE MOULAGE D'ÉLÉMENTS PAR INJECTION DE POUDRE

(30) Priorität: 18.05.2011 EP 11166493
(43) Veröffentlichungstag der Anmeldung: 26.03.2014
(73) Patentinhaber: BASF SE, 67056 Ludwigshafen am Rhein (DE)
(72) Erfinder: TER MAAT, Johan, 68163 Mannheim (DE); BLÖMACHER, Martin, 67149 Meckenheim (DE); WOHLFROMM, Hans, 68163 Mannheim (DE)
(74) Vertreter: BASF IP Association
(86) Internationale Anmeldenummer: PCT/IB2012/052418
(87) Internationale Veröffentlichungsnummer: WO 2012/156905

(56) Entgegenhaltungen:
- EP-A2- 2 686 286
- US-A- 5 604 919
- US-A1- 2009 288 739

## Beschreibung

Die vorliegende Erfindung betrifft ein Verfahren zur Herstellung von metallischen Formkörpern im Pulverspritzgussverfahren.

Metallische Formkörper können durch Spritzgießen von thermoplastischen Massen hergestellt werden, die neben Metallpulvern ein organisches Bindemittel aufweisen. Es handelt sich um hochgefüllte organische Polymerformmassen. Nach dem Spritzgießen, Extrudieren oder Verpressen der thermoplastischen Masse zu einem sogenannten Grünkörper wird das organische Bindemittel größtenteils entfernt und es wird ein Braunkörper erhalten, der danach gesintert wird.

Die ersten Bindemittel basierten im Allgemeinen auf Mischungen von Polyethylen oder Polypropylen und Wachs. Sie wurden durch Ausschmelzen zunächst vom Wachs befreit und der Restbinder wurde in einem langsamen Pyrolyseschritt ausgebrannt. Für das Ausschmelzen müssen die Grünteile in einem Pulverbett eingelagert werden, weil die Grünfestigkeit durch das Schmelzen praktisch nicht gegeben ist.

Bei späteren Bindersystemen für die thermische Entbinderung wurde wegen der zeitaufwändigen Vorgehensweise auf das Ausschmelzen verzichtet.

Üblicherweise besteht ein Bindersystem für die vollständige thermische Entbinderung aus mehreren Komponenten (z.B. DE 199 25 197 A1). Diese Komponenten werden sukzessive beim Aufheizen freigesetzt; die volatileren Komponenten schaffen dabei Kanäle für die höhermolekularen Bestandteile, die sich erst später, bei einer höheren Temperatur, zersetzen.

Beide vorgenannten Verfahren sind ausnahmslos langsam; die Entbinderung dauert 1 bis 3 Tage. Durch den langen Verbleib in einem Temperaturbereich, in dem das Bindemittel längst geschmolzen ist, ist eine Verformung der Formteile durch ihr Eigengewicht praktisch unvermeidbar. Beide Verfahren werden aber noch immer vereinzelt eingesetzt.

Eine Verbesserung sind Verfahren (US 4,197,118 A, EP 0 501 602 A2) bei welchen eine Binderkomponente (z.B. Wachse oder Polyethylenglykol) durch Lösungsmittelextraktion entfernt wird. Der verbleibende nicht lösliche Restbinder (z.B. Polyethylen) wird durch eine thermische Zersetzung aus dem Formteil entfernt. Diese Restentbinderung dauert i.a. 0,5 bis 1 Tag und ist somit etwas schneller als die vollständige thermische Entbinderung. Die verwendeten Bindersysteme enthalten i.a. ca. 30 bis 70 Vol-% des löslichen Polymeren.

WO 2012/123913 A2 beschreibt ein weiteres Verfahren zur Herstellung von metallischen oder keramischen Formkörpern aus einer thermoplastischen Masse enthaltend ein POM-haltiges Bindemittel B1) und ein anderes Bindemittel B2). Das Grünteil wird zuerst mit einem Lösungsmittel für die Bindemittelkomponente B₂) behandelt und danach wird das getrocknete Formteil zum Entfernen der Bindemittelkomponente B1) einer säurehaltigen Atmosphäre ausgesetzt.

R. M. German ("Injection Molding of Metals and Ceramics", MPIF 1997, Kapitel 7, Seite 178) lehrt, dass bei der Lösungsmittelentbinderung die Untergrenze für eine praktikable Entfernung der löslichen Binderkomponente eines mehrkomponentigen Binders 30 Vol-% beträgt. Häufig stellt die lösliche Komponente zwei Drittel des Binders; die Obergrenze wird mit 98 % angegeben.

WO 2011/016718 A1 beschreibt ein Verfahren zur Herstellung von metallischen oder keramischen Formkörpern, bei welchem aus einem metallischen oder keramischen Sinterpulver mit einer Bindermischung aus einem Polymer wie z.B. Polyoxymethylen (POM oder auch Polyacetal) und einem nicht-polymeren Lösungsmittel für das Polymer (Molmasse < 300 g/mol, Schmelzpunkt > RT) eine Formmasse gebildet wird. Der Binder enthält vorzugsweise jeweils mindestens 5 Gew.-% des Polymers und des nicht-polymeren Lösungsmittels. Das nicht-polymere Lösungsmittel wird verdampft (z.B. bei 69 bis 130°C) oder kann aus der Formmasse mit einem weiteren Lösungsmittel herausgelöst oder verdünnt werden. Das verbleibende Polymer wird durch eine thermische Entbinderung, vorzugsweise oberhalb 200°C, entfernt. In den Beispielen mit einem Metallpulver, POM als Binderkomponente neben Caprolactam (Gew.-Anteile 50:50) wird nur die 2-stufige thermische Entbinderung mit einer Verdampfung des Lösungsmittels bei 69 bis 130°C und einer thermischen Entbinderung ≥ 240°C offenbart. Von Nachteil bei diesem Verfahren ist, dass solche Binder beim Mischen mit dem Sinterpulver und bei der Verarbeitung auf der Spritzgießmaschine bereits das nicht polymere Lösungsmittel verdampfen. Die niedermolekulare Komponente wird an der Grünteiloberfläche ausgeschwitzt und verschmutzt die Spritzgießform. Darüber hinaus ist die Grünteilfestigkeit deutlich verringert.

Bei einem weiteren Verfahren zur Herstellung von metallischen oder keramischen Formkörpern wird zunächst eine Binderkomponente (im Allgemeinen Polyoxymethylen) aus der Formmasse katalytisch und danach eine weitere verbleibende Binderkomponente eines säurestabilen Polymers thermisch entfernt. Die katalytische Entbinderung kann durch Behandlung der Formmasse in einer gasförmigen, säurehaltigen Atmosphäre bei erhöhter Temperatur erfolgen. Dabei werden beispielsweise Polyoxymethylenhomo- oder copolymerisate rückstandsfrei depolymerisiert. Die verbleibende Binderkomponente, deren Restbindergehalt nur um die 10 % der anfangs vorhandenen Bindermenge beträgt, wird danach thermisch bei 250-500°C innerhalb von ca. 3 bis 6 h entfernt.

EP2043802B1 beschreibt ein Verfahren zur Herstellung einer thermoplastischen Masse, enthaltend als wesentliche Komponenten A) 40 bis 70 Vol.-% eines sinterbaren pulverförmigen Metalls oder einer sinterbaren pulverförmigen Metalle gierung oder deren Mischungen, B) 30 bis 60 Vol.-% einer Mischung aus B1) 50 bis 96 Gew.-% eines oder mehrerer Polyoxymethylenhomo- oder -copolymerisate; B2) 2 bis 35 Gew.-% eines oder mehrerer Polyolefine; B3) 2 bis 40 Gew.-% Poly-1,3-dioxepan oder Poly-1,3-dioxolan oder deren Mischungen als Bindemittel, wobei die Summe der Gewichtsanteile der Komponenten B1, B2 und B3 100% ergibt, und C) 0 bis 5 Vol.-% eines Dispergierhilfsmittels, dadurch gekennzeichnet, dass man a1) die Komponente B) bei Temperaturen von 150 bis 220 °C aufschmilzt und anschließend b1) die Komponente A) gegebenenfalls zusammen mit der Komponente C) bei Temperaturen im gleichen Bereich wie in Schritt a) zu dem Schmelzestrom der Komponente B) dosiert oder dass man. a2) die Komponenten B) und C) in Gegenwart der Komponente A) bei Temperaturen von 150 bis 220 °C aufschmilzt.

Geeignet für die vorgenannten Verfahren mit säurekatalysierter und thermischer Entbinderung zur Herstellung von metallischen oder keramischen Formkörpern sind beispielsweise Bindemittelsysteme enthaltend eine Mischung aus Polyoxymethylenhomo- oder copolymerisaten (= POM) und ein damit nicht mischbares Polymerisat wie Polyolefine, insbesondere Polyethylen und Polypropylen, oder auch Polymerisaten von Methacrylsäureestern wie PMMA (EP 0 465 940 A1). Weiterhin geeignete Bindemittelsysteme enthalten als weitere Bindemittelkomponente neben POM ein Polymersystem aus Polytetrahydrofuran und mindestens einem Polymer aus C₂₋₈-Olefinen, vinylaromatischen Monomeren, Vinylestern aliphatischer C₁₋₈-Carbonsäuren, Vinyl-C₁₋₈-Alkylethern oder C₁₋₁₂-Alkyl(meth)acrylaten (DE 100 19 447 A1) oder ein Polymersystem aus C₂₋₈-Olefinen und Poly-1,3-dioxepan oder Poly-1,3-dioxolan (WO 2008/006776 A1).

Eine komplett thermische Binderentfernung wird auch mit Polyoxymethylenbindern am Beispiel von Keramikpulvern bei Temperaturen von 160 bis 220°C in Gegenwart von Luft bzw. bei 300 bis 360°C in Gegenwart von Stickstoff beschrieben (US 5,080,846 A und WO 91/07364 A1).

Y. Kankawa (Journal of the Japan Society of Powder Metallurgy 43/7 (1996) 840 bis 845 berichtet über Untersuchungen einer thermischen Entbinderung in Luft von einem Metallpulver (SUS316L) mit u.a. Polyacetal als Binderkomponente bei 300 bis 320°C.

Wie bereits zuvor ausgeführt, ist die rein thermische Binderentfernung sehr langsam und eine Verformung der Formkörper tritt sehr häufig auf, da die Temperaturen bei der thermischen Entbinderung (> 200°C) der metallischen Formmassen in einem Temperaturbereich weit oberhalb des Schmelzebereichs von Polyacetal (160 bis 170°C) liegen.

Darüber hinaus stellt die thermische Entbinderung in einer sauerstoffhaltigen Atmosphäre bei Verwendung von Metallpulvern, im Gegensatz zu Keramikpulvern, ein Problem dar, weil die Pulveroberfläche bei dem Vorgang im Allgemeinen oxidiert wird und damit die Qualität und Integrität des gesinterten Formteils beeinträchtigt wird.

Aufgabe der Erfindung ist es daher ein verbessertes Verfahren zur Herstellung von metallischen Formkörpern bereitzustellen, das die vorgenannten Nachteile nicht besitzt.

Die Aufgabe wird durch das erfindungsgemäße Verfahren gemäß Anspruch 1 gelöst. Es wurde nun überraschend gefunden, dass es möglich ist, metallische Formkörper mit verbesserter Qualität und Integrität durch die Kombination einer Lösungsmittelentbinderung mit anschließender thermischer Restentbinderung in einer sauerstoffhaltigen Atmosphäre aus Formmassen enthaltend Metallpulver und Polyacetal-basierten Bindersysteme zu erhalten.

Gegenstand der Erfindung ist ein Verfahren zur Herstellung eines metallischen Formkörpers aus einer thermoplastischen Masse durch Spritzgießen oder Extrusion zu einem Formteil, Entfernen des Bindemittels und Sintern, dadurch gekennzeichnet, dass eine thermoplastische Masse eingesetzt wird, enthaltend
A) 40 bis 65 Vol.-%, mindestens eines sinterbaren Metallpulvers A,
B) 35 bis 60 Vol.-% einer Mischung aus
   B₁) 50 bis 95 Gew.-% eines oder mehrerer Polyoxymethylenhomo- oder -copolymerisate;
   B₂) 5 bis 50 Gew-% eines in B₁) homogen gelösten oder mit einer mittleren Teilchengröße von weniger als 1 µm in B₁) dispergierten Polymerisats ausgewählt aus aliphatischen Polyurethanen, aliphatischen unvernetzten Polyepoxiden, Polyethern, aliphatischen Polyamiden, Polyacrylaten und deren Mischungen,
   als Bindemittel, und
C) 0 bis 5 Vol.-% eines Dispergierhilfsmittels,
   wobei die Summe der Komponenten A), B) und C) 100 Vol.-% nicht überschreitet;
   und zum Entfernen des Bindemittels
   a) das Formteil mit einem Lösungsmittel behandelt wird, welches die Bindemittelkomponenten B₂) und gegebenenfalls C) aus dem Formteil extrahiert und in welchem die Bindemittelkomponente B₁) unlöslich ist,
   b) dann das Lösungsmittel durch Trocknen aus dem Formteil entfernt wird, und
   c) das Formteil thermisch bei 140 -200°C, bevorzugt 140 - 170 °C in einer sauerstoffhaltigen Atmosphäre behandelt wird, wodurch die Bindemittel komponente B₁) zu mindestens 20 Gew.-%, vorzugsweise zu mindestens 50 Gew.-%, ganz bevorzugt zu mindestens 85 Gew.-%, aus dem Formteil entfernt wird,
   wobei im Anschluss an Schritt b) keine Behandlung des Formteils in einer säurehaltigen Atmosphäre erfolgt.

Die Polyoxymethylenhomo- oder copolymerisate (POM) sind als solche bekannt und handelsüblich. Die Homopolymeren werden üblicherweise durch Polymerisation von Formaldehyd oder Trioxan hergestellt, vorzugsweise in der Gegenwart von geeigneten Katalysatoren. Im Rahmen der Erfindung bevorzugte Polyoxymethylen-Copolymere enthalten ebenfalls Trioxan und andere cyclische oder lineare Formalen bzw. sonstigen Formaldehyd-Quellen als Hauptmonomere. Die Bezeichnung Hauptmonomere soll ausdrücken, dass der Anteil dieser Monomere an der Gesamtmonomermenge, also der Summe von Haupt- und Comonomeren, größer ist als der Anteil der Comonomere an der Gesamtmonomermenge. Ganz allgemein weisen derartige POM-Polymere mindestens 50 mol-% an wiederkehrenden Einheiten -CH₂O- in der Polymerhauptkette auf. Geeignete Polyoxymethylencopolymere werden in der EP-A 0 446 708 (Seite 3, Zeilen 39 bis Seite 4, Zeile 31) beschrieben.

Der Anteil der Komponente B₁) beträgt bevorzugt 65 bis 85 Gew.-%, bezogen auf die Gesamtmenge des Bindemittels B).

Der Anteil der Komponente B₂) beträgt bevorzugt 15 bis 35 Gew-%, bezogen auf die Gesamtmenge des Bindemittels B).

Als Komponente B₂) werden Polymerisate ausgewählt aus aliphatischen Polyurethanen, aliphatischen unvernetzten Polyepoxiden, Polyethern, aliphatischen Polyamiden, Polyacrylaten und deren Mischungen eingesetzt. Die vorgenannten Polymerisate B₂) werden ebenfalls in der EP-A 0 446 708 (Seite 4, Zeile 34 bis Seite 7, Zeile 12) beschrieben.

Besonders bevorzugt unter den vorgenannten Polymerisaten B₂) sind Polyether, insbesondere Poly-(C₂-C₆)-alkylenoxide, wie Polyethylenoxid (PEO), Polypropylenoxid, Poly-1,3-dioxepan (PDX), Poly-1,3-dioxan, Poly-1,3-dioxolan, Polytetrahydrofuran (PTHF) und/oder deren Mischungen, vorzugsweise mit mittleren Molekulargewichten (Gewichtsmittelwert) im Bereich von 600 bis 100 000 g/mol, besonders bevorzugt 2000 bis 50 000. Entsprechende Produkte sind im Handel erhältlich, oder die entsprechenden Herstellungsverfahren verlaufen ähnlich wie für Polyoxymethylencopolymere beschrieben und sind dem Fachmann bekannt, so dass sich hier nähere Angaben erübrigen. Es können auch Mischungen von verschiedenen Polyethern und/oder von Polyethern verschiedener Molekulargewichte eingesetzt werden.

Unter dem sinterbaren Metallpulver A sind Metallpulver, Metalllegierungspulver, Metallcarbonylpulver und/oder Gemische davon zu verstehen.

Als Metalle, die in Pulverform vorliegen können, seien beispielsweise Aluminium, Eisen, insbesondere Carbonyleisenpulver, Chrom, Cobalt, Kupfer, Nickel, Silizium und Titan genannt. Als pulverförmige Metalllegierungen sind beispielsweise hoch oder niedrig legierte Stähle sowie Metalllegierungen auf der Basis von Aluminium, Eisen, Titan, Kupfer, Nickel, Wolfram oder Kobalt zu nennen. Dabei können sowohl Pulver von bereits fertigen Legierungen als auch Pulvermischungen der einzelnen Legierungsbestandteile eingesetzt werden.

Die Korngrößen der Pulver betragen vorzugsweise 0,1 bis 50 µm, besonders bevorzugt 0,3 bis 30 µm.

Das als Komponente C) gegebenenfalls vorliegende Dispergierhilfsmittel kann aus bekannten Dispergierhilfsmitteln ausgewählt sein. Beispiele sind oligomeres Polyethylenoxid mit einem mittleren Molekulargewicht von 200 bis 600, Stearinsäure, Stearinsäureamid, Hydroxystearinsäure, Fettalkohole, Fettalkoholsulfonate und Blockcopolymere von Ethylen- und Propylenoxid, sowie Polyisobutylen.

Zusätzlich können die thermoplastischen Massen auch übliche Zusatzstoffe und Verarbeitungshilfsmittel, die die rheologischen Eigenschaften der Mischungen bei der Formgebung günstig beeinflussen, enthalten.

Die Herstellung der bei dem erfindungsgemäßen Verfahren eingesetzten thermoplastischen Masse kann auf übliche Weise in einem Kneter oder Extruder bei Temperaturen von 150 bis 200°C erfolgen (vgl. EP-A-0 413 231). Nach Abkühlen der Masse kann diese granuliert werden. Gemäß einer bevorzugten Ausführungsform kann die Herstellung der zu verformenden thermoplastischen Masse durch Aufschmelzen der Komponenten B) und Einmischen der Komponenten A) und gegebenenfalls C) erfolgen. Beispielsweise kann die Komponente B) in einem Zweischneckenextruder bei Temperaturen von vorzugsweise 150 bis 220°C, insbesondere 170 bis 200°C aufgeschmolzen werden. Die Komponente A) wird anschließend bei Temperaturen im gleichen Bereich in der erforderlichen Menge zu dem Schmelzestrom der Komponente B) dosiert. Vorteilhafterweise enthält die Komponente A) auf der Oberfläche das oder die Dispergierhilfsmittel C). Die Herstellung der thermoplastischen Massen kann aber auch durch Aufschmelzen der Komponenten B) und C) in Gegenwart der Komponente A) bei Temperaturen von 150 bis 220°C erfolgen.

Für die Formgebung der thermoplastischen Formmasse durch Spritzguss können die üblichen Schnecken- und Kolbenspritzgussmaschinen eingesetzt werden. Die Formgebung erfolgt im Allgemeinen bei Temperaturen von 175 bis 200°C und Drücken von 3.000 bis 20.000 kPa in Formen, die eine Temperatur von 60 bis 140°C aufweisen.

Die entformten Grünlinge werden dann nach dem erfindungsgemäßen Verfahren gemäß Schritt a) mit einem Lösungsmittel behandelt. Dabei richtet sich die Wahl des Lösungsmittels nach der chemischen Natur der Bindemittelkomponente B₂). Es werden im Folgenden nur beispielhaft Lösemittel für einige Bindemittelkomponenten B₂) angegeben; die Lösemittel für andere Bindemittelkomponenten B₂) sollten dem Fachmann bekannt sein. Auch Mischungen geeigneter Lösemittel können verwendet werden. Polyacrylate (z.B. PMMA) und Polyamide sind im Allgemeinen in den folgenden Lösemitteln löslich: Ethern wie Diethylether oder Tetrahydrofuran, Ketonen wie Methylethylketon oder Aceton, Estern wie Butyrolacton und C₁C₄-Alkoholen wie Ethanol.

Polyether wie Polytetrahydrofuran, Poly-1,3-dioxepan, Poly-1,3-dioxolan, Polyethylenoxid oder Polypropylenoxid können beispielsweise gelöst werden in Lösemitteln wie Tetrahydrofuran oder Aceton und in C₁C₆- Alkoholen wie Ethanol und Isopropanol; Polyethylenoxid kann auch in Wasser gelöst werden.

Die Behandlung des Formteils mit einem Lösungsmittel gemäß Schritt a) des erfindungsgemäßen Verfahrens kann in handelsüblichen Anlagen mit geschlossenem Lösemittelkreislauf für die Reinigung von bearbeiteten, mit Schmiermittel verunreinigten Werkstücken durchgeführt werden, beispielhaft beschrieben in DE-A 43 371 29. Vorzugsweise, um den Lösungsprozess zu beschleunigen, erfolgt Schritt a) bei erhöhter Temperatur, d.h. einer Temperatur oberhalb Raumtemperatur bis zur Siedetemperatur des Lösemittels, insbesondere bei einer Temperatur von 40 bis 120°C. Besonders bevorzugt erfolgt Schritt a) bei Siedetemperatur des Lösungsmittels unter Rückfluss.

Die als Bindemittelkomponente B₁) bzw. Restbinder für Schritt a) des erfindungsgemäßen Verfahrens eingesetzten Polyoxymethylenhomo- und copolymere (POM) sind bis 120°C gegen praktisch alle gängigen Lösemittel resistent und garantieren auch bei höheren Temperaturen bis 120°C immer noch eine sehr hohe Festigkeit.

Es ist von Vorteil, wenn in Schritt a) des erfindungsgemäßen Verfahrens bei der Extraktion ein großer Konzentrationsunterschied zwischen der löslichen Binderkomponente B₂) im Formteil und dem Lösungsmittel besteht. Letzteres kann man dadurch erreichen, dass man das beladene Lösungsmittel häufig durch frisches Lösungsmittel austauscht und/oder das gelöste Extrakt schnell beispielsweise durch eine Umwälzung von der Oberfläche des Extraktionsgutes weggeführt wird.

Die Behandlung mit einem Lösungsmittel gemäß Schritt a) des erfindungsgemäßen Verfahrens wird vorzugsweise so lange durchgeführt, bis die Bindemittelkomponente B₂) mindestens zu 75 Gew.-%, vorzugsweise zu 85 Gew.-%, besonders bevorzugt zu 90 Gew.-%, aus dem Formteil entfernt ist. Dieser Zustand wird im Allgemeinen nach 4 bis 48 Stunden erreicht. Die erforderliche Behandlungsdauer hängt von der Behandlungstemperatur, von der Güte des Lösungsmittels für die Bindemittelkomponente B₂), vom Molekulargewicht der Komponente B₂), wie auch von der Größe des Formkörpers ab.

Nach der Extraktion (Schritt a) müssen die Grünteile, welche nun porös und mit Lösungsmittel gesättigt sind, noch getrocknet werden. Die Trocknung des Formteils geschieht vorzugsweise auf herkömmliche Weise, beispielsweise mit Hilfe eines Vakuumtrockenofens, eines Wärmeschranks oder eines Umwälzofens, gemäß Schritt b) des erfindungsgemäßen Verfahrens. Die Trocknung kann aber auch vorteilhaft in Schritt c) des erfindungsgemäßen Verfahrens integriert sein. In diesem Fall kann sowohl die Trocknung als auch die thermische Restentbinderung in der gleichen Anlage, beispielsweise in einem Umwälzofen, ausgeführt werden, wodurch ein Umladen der Formteile zwischen Trocknung und thermischer Entbinderung nicht erforderlich ist.

Vorzugsweise wird das Lösungsmittel in einem separaten Schritt b) entfernt. Dabei orientiert sich die Trocknungstemperatur nach der Siedetemperatur des Lösungsmittels, wird aber vorzugsweise etwas niedriger gewählt, um das Risiko eines schlagartigen oder zu schnellen Trocknungsvorgangs mit möglichen negativen Folgen für die Qualität des Grünteils zu vermeiden. Üblicherweise ist die Trocknung gemäß Schritt b) des erfindungsgemäßen Verfahrens in 0,5 bis 8 h abgeschlossen.

Die thermische Entbinderung c) gemäß dem erfindungsgemäßen Verfahren findet in Ofenanlagen statt, in denen die Grünlinge in einer sauerstoffhaltigen Atmosphäre für einen definierten Zeitraum einer geeigneten Temperatur im Bereich von 140 bis 200°C ausgesetzt werden. Die Konstruktion und die Materialien des Ofens müssen gewährleisten, dass die Temperatur in dem Ofenvolumen überall gleich ist, und eine gute Wärmeübertragung auf die zu entbindernden Formteile erreicht wird. Insbesondere sind kalte Stellen im Inneren der Ofenanlage zu vermeiden, um das Auskondensieren von Zersetzungsprodukten zu verhindern. Unter einer sauerstoffhaltigen Atmosphäre ist ein Gasgemisch aus einem Inertgas wie Stickstoff oder Argon mit 1 bis 100 Vol-% Sauerstoff zu verstehen, wobei Luft bevorzugt ist. Bei Batch-Öfen sind aus dem Stand der Technik Einbauten bzw. Umwälzelemente bekannt, die für eine gleichmäßige Verteilung und Verwirbelung der Ofenatmosphäre sorgen, so dass sämtliche Formkörper möglichst gleichen Temperaturbedingungen unterliegen.

Ein bevorzugter Ofen ist ein üblicher Umwälzofen für Wärmebehandlungen. Insbesondere bei höherer Beladung des Ofens ist neben der Gasverwirbelung eine ausreichende Frischgasversorgung notwendig (mindestens ein zehnfacher Austausch), um das Zersetzungsprodukt Formaldehyd ausreichend zu verdünnen (<4 Vol-%) und damit den Ofen in einem sicheren Betriebszustand zu halten, da z.B. Luft/Formaldehyd-Gemische zündfähig sind.

Die thermische Restentbinderung gemäß Schritt c) des erfindungsgemäßen Verfahrens wird so lange durchgeführt, bis die Bindemittelkomponente B₁) mindestens zu 20 Gew.-%, vorzugsweise zu 50 Gew.-%, besonders bevorzugt zu 85 Gew.-%, aus dem Formteil entfernt ist.

Es kann wünschenswert sein nicht die ganze vorhandene Menge an Polyacetal thermisch zu entfernen, da üblicherweise die entbinderten Bauteile noch für das Sintern in einen anderen Ofen umgelagert werden müssen und die Formteilfestigkeit dann unzureichend werden kann. In solchen Fällen kann die Entfernung von lediglich 20 bis 50 % der Maximalmenge der Bindemittelkomponente B₁) zielführender sein; der zurückbleibende, stabilisierende Rest kann dann im Sinterofen mit einem angepassten Zyklus thermisch entfernt werden.

Die durch das erfindungsgemäße Verfahren erhaltenen Metallformkörper sind durch die im Vergleich zum Stand der Technik verwendeten niedrigen Temperaturen bei der thermischen Entbinderung nur oberflächlich oxidiert und besitzen eine verbesserte Qualität und Integrität als Metallformkörper, die gemäß dem Stand der Technik hergestellt wurden.

Die Erfindung wird nachstehend anhand von Beispielen näher erläutert.

In den nachfolgenden Beispielen wurden Versuchsmassen in einem Konusmischer gemischt und in einem auf 190°C beheizten Laborextruder homogenisiert und granuliert.

### Beispiel 1

Die Formmasse 1 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 90 Gew-% Polyoxymethylen mit 2 mol-% 1,3-Dioxepan
   + 10 Gew-% Polyethylenoxid (PEO) mit einer Molmasse 2000, endgruppenverschlossen durch Methylierung

### Beispiel 2

Die Formmasse 2 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 80 Gew-% Polyoxymethylen mit 2 mol-% 1,3-Dioxepan
   + 20 Gew-% Polyethylenoxid (PEO) mit einer Molmasse 2000, endgruppenverschlossen durch Methylierung

### Beispiel 3

Die Formmasse 3 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 50 Gew-% Polyoxymethylen mit 2 mol-% 1,3-Dioxepan
   + 50 Gew-% Polyethylenoxid (PEO) mit einer Molmasse 2000, endgruppenverschlossen durch Methylierung

### Beispiel 4

Die Formmasse 4 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 90 Gew-% Polyoxymethylen mit 2 mol-% 1,3-Dioxepan
   + 10 Gew-% Polytetrahydrofuran (PTHF) mit einer Molmasse 2000

### Beispiel 5

Die Formmasse 5 wies die folgende Zusammensetzung auf:
- 64 Vol-% eines Metallpulvers der Zusammensetzung 17-4PH (DIN 1.4542) mit einer mittleren Korngröße von 7 µm
- 36 Vol-% Binder, enthaltend
   + 80 Gew-% Polyoxymethylen mit 2 mol-% 1,3-Dioxepan
   + 20 Gew-% Poly-1,3-Dioxepan (PDX) mit einer Molmasse 34.000,

### Spritzgießversuche an realen Bauteilen

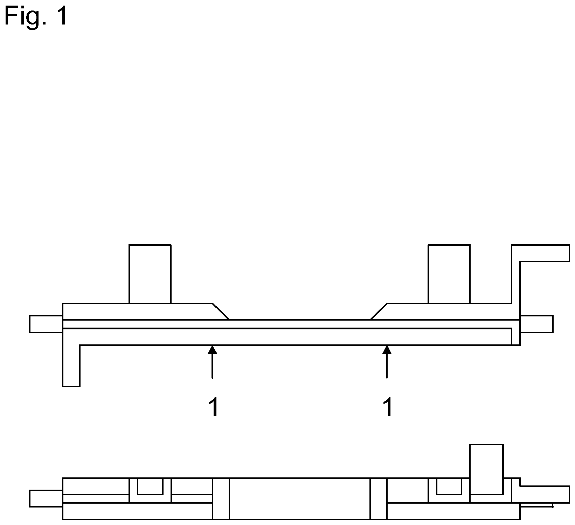

Die Untersuchung der generellen Eignung der Versuchsmassen wurde mit einem komplexen und schweren Bauteil ausgeführt, ein mit zwei Bandangüssen an den Positionen 1 angespritztes Scharnier komplexer Geometrie (Figur 1: oben Ansicht, unten Aufsicht des Bauteils).

Die Länge des Bauteils betrug 100 mm, das Gewicht des erhaltenen Sinterteils war für die Metallpulverbeispiele 1 bis 5 ca. 34 g.

Damit ist sichergestellt, dass die Ergebnisse der Versuche auch praxisrelevant sind, denn das Eigengewicht dieses Bauteils stellt überdurchschnittlich hohe Forderungen an die Festigkeit nach der Entbinderung.

### Untersuchung der Verarbeitung auf der Spritzgießmaschine

Die Versuchsmassen wurden im Zylinder der Spritzgießmaschine bei 190°C aufgeschmolzen, die Spritzgießform war auf 135°C temperiert. Generell war der benötigte Einspritzdruck ca. 1900 bar, lediglich Versuchsmasse 3 mit einem hohen PEO-Gehalt und der niedrigeren Molmasse 2000 konnte mit 1100 bar verarbeitet werden.

Die Versuchsmassen unterschieden sich in der benötigten Kühlzeit vor der Entformung. Die Versuchsmassen mit einem höheren Anteil an Zweitbinder (30 % und höher) waren etwas weicher und benötigten eine längere Kühlzeit um das Grünteil intakt entformen zu können; die Grünteile zeigten auch etwas stärker Schlieren auf der Oberfläche. Die Versuchsmasse 3 mit 50 % PEO-Gehalt musste wegen der verringerten Grünteilfestigkeit vorsichtiger entformt und hantiert werden und wird daher als Obergrenze für Binderkomponente B₂) gesehen.

Bei allen Versuchsmassen war die Verarbeitung ohne besondere Probleme möglich.

### Untersuchung des Entbinderns und des Sinterns

Die aus den Versuchsmassen hergestellten Grünteile wurden in einem Lösungsmittel vorbehandelt, danach wurde das Formteil thermisch restentbindert und gesintert.

Für die Lösemittelentbinderung wurden die Grünteile in einem gerührten Dreihalskolben in siedendem Aceton unter Rückfluss behandelt. Grünteile der Beispiele 1 bis 4 wurden nach 7 h, 14 h, 21 h und 28 h Lagerung im Lösemittel entnommen, getrocknet und gewogen. Die Grünteile aus Beispiel 5 wurden nur am Ende der Lagerung (28 h) zurückgewogen.

Tabelle 1 zeigt die Ergebnisse bezüglich Gewichtsverlust als Prozent der Theorie in der Lösemittel-Primärentbinderung mit Aceton:

**Tabelle 1**

| | | | Gewichtsverlust des Formteils (% der Th.) | | | |
|---|---|---|---|---|---|---|
| Beispiel | Metallpulver | Zusammensetzung Bindemittel (Gew.-%) | 7 h Aceton | 14 h Aceton | 21 h Aceton | 28 h Aceton |
| 1 | Fe/Ni | POM-10% PEO 2000 | 59 | 77 | 84 | 89 |
| 2 | Fe/Ni | POM - 20 % PEO 2000 | 70 | 85 | 92 | 95 |
| 3 | Fe/Ni | POM - 50 % PEO 2000 | 71 | 85 | 94 | 97 |
| 4 | Fe/Ni | POM -10 % PTHF 2000 | 69 | 81 | 85 | 88 |
| 5 | 17-4PH | POM -20 % PDX 34000 | | | | 90 |

Man erkennt, dass bereits bei einem Bindemittelgehalt von 20 Gew.-% der Komponente B₂) die maximale Entbinderungsgeschwindigkeit im siedenden Lösemittel erreicht wird; Beispiel 3 mit dem höchsten PEO-Gehalt ist nicht mehr wesentlich schneller hinsichtlich des Lösungsvorgangs. Selbst bei 10 Gew.-% der Komponente B₂) (Beispiel 1) ist die Entfernung noch erstaunlich zügig.

Die nachfolgende thermische Entbinderung der Formteile wurde in einem 50-L-Luftumwälzofen bei Temperaturen bis max. 170 °C ausgeführt; es wurde mit 500 L/h Luft gespült. Folgendes Heizprogramm wurde verwendet:

| Stufe | T₁ | T₂ | | Heizrate | Verweilzeit bei T₂ |
|---|---|---|---|---|---|
| | [°C] | [°C] | | [°C/h] | [h] |
| 0 | RT | 130 | | 300 | 1 |
| 1 | 130 | 140 | | 10 | 6 |
| 2 | 140 | 150 | | 10 | 16 |
| 3 | 150 | 160 | | 10 | 1 |
| 4 | 160 | 170 | | 10 | 1 |
| 5 | 170 | 170 | - | | 5 |
| 6 | 170 | 170 | - | | 39 |

Als Vergleichsbeispiele 1 und 2 wurden nicht mit einem Lösungsmittel vorentbinderte Grünteile mit einer Zusammensetzung gemäß den Beispielen 1 bzw. 5 mit zur thermischen Entbinderung gegeben. Die mit dem vorgenannten Heizprogramm erzielten Werte für den Gewichtsverlust des Formteils an Polyoxymethylen sind Tabelle 2 zu entnehmen. In der letzten Spalte wird der aus dem Gehalt an Polyoxymethylen errechnete, theoretisch erreichbare Gewichtsverlust angegeben.

**Tabelle 2**

| | | Gewichtsverlust [%] | | | | | | |
|---|---|---|---|---|---|---|---|---|
| Beispiel | Metall | 140 °C 6 h | 150 °C 16 h | 160 °C 1 h | 170 °C 1 h | 170 °C 5 h | 170 °C 39 h | Theorie [%] |
| 1 | Fe/Ni | 3,4 | 6,9 | 7,9 | 9,3 | 10,8 | 10,7 | 10,9 |
| 2 | Fe/Ni | 3,8 | 6,9 | 7,8 | 8,8 | 9,8 | 9,7 | 10,0 |
| 3 | Fe/Ni | 2,9 | 5,5 | 6,1 | 7,2 | 7,8 | 7,6 | 7,9 |
| 4 | Fe/Ni | 3,2 | 6,5 | 7,8 | 9,3 | 10,8 | 10,7 | 10,9 |
| 5 | 17-4PH | 1,4 | 2,1 | 2,3 | 4,1 | 6,3 | 7,3 | 7,4 |
| Vgl. 1 | Fe/Ni | - | - | - | - | 0,2 | 10,3 | 10,9 |
| Vgl. 2 | 17-4PH | - | - | - | 0,1 | 0,7 | 7,1 | 7,4 |

Ohne Lösungsmittelentbinderung (siehe Vergleichsversuche 1 und 2) setzt der Abbau des Polyoxymethylens bei 170°C langsam ein. Bei Formteilen, die nach dem erfindungsgemäßen Verfahren zunächst einer Lösungsmittelvorentbinderung und einer nachfolgenden thermischen Entbinderung unterzogen wurden (siehe Beispiele 1-5), setzt die thermische Entbinderung an Luft bereits bei ca. 140°C ein. Dieser Effekt ist besonders überraschend, weil das Polyoxymethylen bei dieser Temperatur noch nicht geschmolzen ist. Daraus resultiert ein erheblicher technischer Vorteil, weil die beschriebene übliche plastische Verformung durch ein Schmelzen des Restbinders vor der eigentlichen thermischen Zersetzung nun gar nicht stattfinden kann.

Alle lösungsmittelvorentbinderten Grünteile waren nach der thermischen Restentbinderung an Luft defektfrei, aber oberflächlich leicht oxidiert. Letzteres wurde durch eine Braunfärbung der Formteile gemäß den Beispielen 1 bis 4 und durch einen Grünstich des Formteils gemäß Beispiel 5, sowie durch eine Gewichtszunahme der Formteile gemäß den Beispielen 1 bis 4 von Heizstufe 5 zu Heizstufe 6 offenkundig. Die thermische Entbinderung der vorentbinderten Grünteile ist nach Heizstufe 5 im Wesentlichen abgeschlossen.

Hingegen zeigten die nicht lösungsmittelvorentbinderten Grünteile gemäß den Vergleichsbeispielen 1 und 2 nach der annähernd vollständigen thermischen Entbinderung in Heizstufe 6 typische gravierende Defekte wie oberflächliche Bläschen und an den dickeren Stellen auch Risse.

Die nach dem erfindungsgemäßen Verfahren erhaltenen Formteile gemäß den Beispielen 1 bis 4 wurden nach Heizstufe 5 im 30-L-Sinterofen mit Molybdänverkleidung und Molybdänsinterelementen unter Wasserstoff der Qualität 4.8 aus der Punktnotation gesintert. Die Festigkeit nach der vollständigen Entbinderung war ausreichend für das Umladen; mit den Formteilen konnte auch hantiert werden.

Die Sinterkurve war wie folgt:
- Raumtemperatur bis 600°C mit 5°C / Min
- Haltezeit bei 600°C: 1 h
- 600°C bis 1280°C mit 5°C / Min
- Haltezeit bei 1280°C: 1 h
- Abkühlen mit 5°C / Min bis 1000°C
- Ofen aus, natürliche Abkühlung.

Mit diesem Sinterprogramm war es für alle Formmassen gemäß den Beispielen 1 bis 4 möglich, eine gute Sinterdichte von zumindest 7,60 g/cm³ zu erreichen. Die nach der thermischen Restentbinderung beobachtete Oxidation war vollständig reduziert und die Sinterteile waren blank.

Die nach dem erfindungsgemäßen Verfahren erhaltenen Formteile gemäß Beispiel 5 wurden ebenfalls nach Heizstufe 5 in dem gleichen Sinterofen unter Wasserstoff der Qualität 4.8 gesintert. Die Sinterkurve war wie folgt:
- Raumtemperatur bis 600°C mit 5°C / Min
- Haltezeit bei 600°C: 1 h
- 600°C bis 1380°C mit 5°C / Min
- Haltezeit bei 1380°C: 1 h
- Abkühlen mit 5°C / Min bis 1000°C
- Ofen aus, natürliche Abkühlung.

Auch hier war es möglich intakte, blanke Sinterteile zu erhalten, sofern die zu 85 % entbinderten Bauteile, die nur eine sehr geringe Festigkeit aufwiesen, vor dem Sintern nicht angefasst werden mussten. Die Sinterteile erreichten eine gute Sinterdichte von 7,68 g/cm³.

Mit den lösungsmittelvorentbinderten Grünteilen aus Beispiel 5 wurde ein weiterer Versuch ausgeführt.

Die im Lösungsmittel vorentbinderten Grünteile wurden 16 h bei 140°C thermisch in Luft entbindert. Der Gewichtsverlust betrug nun 2,2 %, also 30 % des Maximalwertes. Diese teilentbinderten Formteile besaßen nun eine fürs Chargieren ausreichende Festigkeit und waren nicht mehr sichtbar oxidiert. Die Sinterung dieser Formteile erfolgte mit einem gängigen, etwas langsameren Temperaturprogramm für die Sinterung von Formteilen mit 10 % Restbinder unter Wasserstoff der Qualität 4.8:
- Raumtemperatur bis 450°C mit 3°C / Min
- Haltezeit bei 450°C: 1 h
- 450°C bis 600°C mit 3°C / Min
- Haltezeit bei 600°C: 1 h
- 600°C bis 1380°C mit 5°C / Min
- Haltezeit bei 1380°C: 1 h
- Abkühlen mit 5°C / Min bis 1000°C
- Ofen aus, natürliche Abkühlung.

Die Sinterteile waren blank, defektfrei und erreichten eine praktisch gleiche Enddichte von 7,66 g/cm³.

## Patentansprüche

1. Verfahren zur Herstellung eines metallischen Formkörpers aus einer thermoplastischen Masse durch Spritzgießen oder Extrusion zu einem Formteil, Entfernen des Bindemittels und Sintern, **dadurch gekennzeichnet, dass** eine thermoplastische Masse eingesetzt wird, enthaltend
A) 40 bis 65 Vol.-%, mindestens eines sinterbaren Metallpulvers A,
B) 35 bis 60 Vol.-% einer Mischung aus
B₁) 50 bis 95 Gew.-% eines oder mehrerer Polyoxymethylenhomo- oder -copolymerisate;
B₂) 5 bis 50 Gew-% eines in B₁) homogen gelösten oder mit einer mittle ren Teilchengröße von weniger als 1 µm in B₁) dispergierten Polymerisats ausgewählt aus aliphatischen Polyurethanen, aliphatischen unvernetzten Polyepoxiden, Polyethern, aliphatischen Polyamiden, Polyacrylaten und deren Mischungen, als Bindemittel, und
C) 0 bis 5 Vol.-% eines Dispergierhilfsmittels,
wobei die Summe der Komponenten A), B) und C) 100 Vol.-% nicht überschreitet; und zum Entfernen des Bindemittels
a) das Formteil mit einem Lösungsmittel behandelt wird, welches die Bindemittelkomponente B₂) und gegebenenfalls Komponente C aus dem Formteil extrahiert und in welchem die Bindemittelkomponente B₁) unlöslich ist,
b) dann das Lösungsmittel durch Trocknen aus dem Formteil entfernt wird, und
c) das Formteil thermisch bei 140 bis 200°C, bevorzugt 140 bis 170°C in einer sauerstoffhaltigen Atmosphäre behandelt wird, wodurch die Bindemittelkomponente B₁) zu mindestens 20 Gew.-%, vorzugsweise zu mindestens 50 Gew.-%, ganz bevorzugt zu mindestens 85 Gew.-%, aus dem Formteil entfernt wird,
wobei im Anschluss an Schritt b) keine Behandlung des Formteils in einer säurehaltigen Atmosphäre erfolgt

2. Verfahren gemäß Anspruch 1, **dadurch gekennzeichnet, dass** der Anteil der Bindemittelkomponente B₂) 15 bis 35 Gew-% beträgt.

3. Verfahren gemäß Anspruch 1 oder 2, **dadurch gekennzeichnet, dass** die Bindemittelkomponente B₂) ein Polyether ausgewählt aus der Gruppe enthaltend Polyethylenoxid, Polypropylenoxid, Poly-1,3-Dioxepan, Poly-1,3-Dioxan, Poly-1,3-Dioxolan, Polytetrahydrofuran (Poly(tetramethylen)oxid) und deren Mischungen ist.

4. Verfahren gemäß einem der Ansprüche 1 bis 3, **dadurch gekennzeichnet, dass** Schritt a) bei einer Temperatur oberhalb Raumtemperatur bis zur Siedetemperatur des Lösemittels ausgeführt wird.

5. Verfahren gemäß einem der Ansprüche 1 bis 4, **dadurch gekennzeichnet, dass** in Schritt a) die Behandlung mit einem Lösungsmittel so lange durchgeführt wird, bis die Bindemittelkomponente B₂) mindestens zu 75 Gew.-%, vorzugsweise zu 85 Gew.-%, aus dem Formteil entfernt ist.

6. Verfahren gemäß einem der Ansprüche 1 bis 5, **dadurch gekennzeichnet, dass** in Schritt c) die thermische Behandlung in einem Umwälzofen erfolgt.

## Claims

1. A process for producing a shaped metallic body from a thermoplastic composition by injection molding or extrusion to form a shaped part, removal of the binder and sintering, wherein a thermoplastic composition comprising
A) from 40 to 65% by volume of at least one sinterable metal powder A,
B) from 35 to 60% by volume of a mixture of
B₁) from 50 to 95% by weight of one or more polyoxymethylene homopolymers or copolymers;
B₂) from 5 to 50% by weight of a polymer selected from among aliphatic polyurethanes, aliphatic uncrosslinked polyepoxides, polyethers, aliphatic polyamides, polyacrylates and mixtures thereof which is homogeneously dissolved or dispersed with an average particle size of less than 1 µm in B₁) as binder and
C) from 0 to 5% by volume of a dispersant,
where the sum of the components A), B) and C) does not exceed 100% by volume, is used;
and to remove the binder
a) the shaped part is treated with a solvent which extracts the binder components B₂) and optionally C) from the shaped part and in which the binder component B₁) is insoluble,
b) the solvent is then removed from the shaped part by drying and
c) the shaped part is treated thermally at 140 - 200°C, preferably 140 - 170°C, in an oxygen-comprising atmosphere, as a result of which the binder component B₁) is removed to an extent of at least 20% by weight, preferably at least 50% by weight, very particularly preferably at least 85% by weight, from the shaped part,
where following step b) the shaped part is not treated in an acidic atmosphere.

2. The process according to claim 1, wherein the proportion of the binder component B₂) is from 15 to 35% by weight.

3. The process according to claim 1 or 2, wherein the binder component B₂) is a polyether selected from the group consisting of polyethylene oxide, polypropylene oxide, poly-1,3-dioxepane, poly-1,3-dioxane, poly-1,3-dioxolane, polytetrahydrofuran (poly(tetramethylene) oxide) and mixtures thereof.

4. The process according to any of claims 1 to 3, wherein step a) is carried out at a temperature above room temperature up to the boiling point of the solvent.

5. The process according to any of claims 1 to 4, wherein the treatment with a solvent in step a) is carried out until the binder component B₂) has been removed to an extent of at least 75% by weight, preferably 85% by weight, from the shaped part.

6. The process according to any of claims 1 to 5, wherein the thermal treatment in step c) is carried out in a convection oven.

## Revendications

1. Procédé de fabrication d'un corps moulé métallique à partir d'une masse thermoplastique par moulage par injection ou extrusion en une pièce moulée, élimination du liant et frittage, **caractérisé en ce qu'**une masse thermoplastique contenant :
A) 40 à 65 % en volume d'au moins une poudre métallique frittable A,
B) 35 à 60 % en volume d'un mélange de :
B₁) 50 à 95 % en poids d'un ou de plusieurs homo- ou copolymères de polyoxyméthylène ;
B₂) 5 à 50 % en poids d'un polymère dissous de manière homogène dans B₁) ou dispersé avec une taille de particule moyenne de moins de 1 µm dans B₁), choisi parmi les polyuréthanes aliphatiques, les polyépoxydes aliphatiques non réticulés, les polyéthers, les polyamides aliphatiques, les polyacrylates et leurs mélanges, en tant que liant, et
C) 0 à 5 % en volume d'un adjuvant de dispersion, est utilisée,
la somme des composants A), B) et C) ne dépassant pas 100 % en volume ; et, pour l'élimination du liant,
a) la pièce moulée est traitée avec un solvant, qui extrait le composant liant B₂) et éventuellement le composant C de la pièce moulée, et dans lequel le composant liant B₁) est insoluble,
b) puis le solvant est éliminé de la pièce moulée par séchage, et
c) la pièce moulée est traitée thermiquement à 140 à 200 °C, de préférence 140 à 170 °C dans une atmosphère contenant de l'oxygène, le composant liant B₁) étant éliminé de la pièce moulée à hauteur d'au moins 20 % en poids, de préférence d'au moins 50 % en poids, de manière tout particulièrement préférée d'au moins 85 % en poids,
aucun traitement de la pièce moulée dans une atmosphère contenant un acide n'ayant lieu après l'étape b).

2. Procédé selon la revendication 1, **caractérisé en ce que** la proportion de composant liant B₂) est de 15 à 35 % en poids.

3. Procédé selon la revendication 1 ou 2, **caractérisé en ce que** le composant liant B₂) est un polyéther choisi dans le groupe contenant le polyoxyde d'éthylène, le polyoxyde de propylène, le poly-1,3-dioxépane, le poly-1,3-dioxane, le poly-1,3-dioxolane, le polytétrahydrofurane (polyoxyde de tétraméthylène) et leurs mélanges.

4. Procédé selon l'une quelconque des revendications 1 à 3, **caractérisé en ce que** l'étape a) est réalisée à une température allant d'une température supérieure à la température jusqu'à la température d'ébullition du solvant.

5. Procédé selon l'une quelconque des revendications 1 à 4, **caractérisé en ce qu'**à l'étape a), le traitement avec un solvant est réalisé jusqu'à ce que le composant liant B₂) soit éliminé de la pièce moulée à hauteur d'au moins 75 % en poids, de préférence 85 % en poids.

6. Procédé selon l'une quelconque des revendications 1 à 5, **caractérisé en ce qu'**à l'étape c), le traitement thermique a lieu dans un four à circulation.
